# EUROPÄISCHE PATENTSCHRIFT

(11) **EP 0 713 230 B1**
(45) Veröffentlichungstag und Bekanntmachung des Hinweises auf die Patenterteilung: **28.01.1998**
(21) Anmeldenummer: 95810690.8
(22) Anmeldetag: 03.11.1995
(51) Int. Cl.: H01G 5/01

(54) **Variabler Kondensator**
Variable capacitor
Condensateur variable

(30) Priorität: 21.11.1994 CH 3503/94
(43) Veröffentlichungstag der Anmeldung: 22.05.1996
(73) Patentinhaber: Comet Technik AG, 3097 Liebefeld (CH)
(72) Erfinder: v. Planta, Andrea, CH-8955 Oetwil (CH); Gerber, Rolf, CH-3122 Kehrsatz (CH)
(74) Vertreter: Goth, Helmut, Dr.

(56) Entgegenhaltungen:
- CH-A- 656 740

## Beschreibung

Die vorliegende Erfindung betrifft einen variablen Kondensator, insbesondere Vakuumkondensator, bei welchem in einem Gehäuse feste Kondensatorplatten und bezüglich diesen linear verschiebbare Kondensatorplatten auf einer motorisch angetriebenen Verstellspindel angeordnet sind, wobei den verschiebbaren Kondensatorplatten Sicherheitsendschalter und eine Positionsanzeigeeinrichtung zugeordnet sind.

Bei derartigen variablen Kondensatoren, welche allgemein in der HF-Technik, der Medizinaltechnik und dgl. Anwendung finden, wurden bisher zwar Sicherheitsendschalter vorgesehen, welche in der einen oder anderen Form mit der Bewegung der verschiebbaren Kondensatorplatten gekoppelt sind. Der Sinn solcher Endschalter liegt darin, die beidseitige Bewegung des verstellbaren Teils des Kondensators zu begrenzen. Ebenfalls bekannt war es, bei solchen Kondensatoren Positionsanzeiger vorzusehen, wobei diese parallel zu den Kondensatoren selbst angeordnet wurden. Ihr Antrieb erfolgte, ähnlich wie der Antrieb der Verstellspindel selbst, über ein Zahnrad oder einen Riementrieb auf die Verstellspindel.

Solche Kondensatoren mit Antrieb, Positionsanzeige und Sicherheitsschaltern sind nicht nur unhandlich und sperrig, sondern auch wegen dem Antrieb mit zwangsläufigem Spiel relativ ungenau und vermögen eine ggf. gewünschte Reproduzierbarkeit nicht zu gewährleisten.

Aufgabe der vorliegenden Erfindung ist somit die Schaffung eines variablen Kondensators mit Sicherheitsendschaltern und Positionsanzeigeeinrichtung, welcher im Vergleich zum Stand der Technik wesentlich weniger Platz beansprucht, präziser arbeitet und trotzdem einfach im Aufbau ist.

Diese Aufgabe wird bei einem variablen Kondensator der eingangs definierten Art erfindungsgemäss durch die Merkmale des kennzeichnenden Teils von Anspruch 1 gelöst.

Besondere Ausführungsformen des Erfindungsgegenstandes sind in den abhängigen Ansprüchen definiert.

Die Ausführung mit direkt auf die Verstellspindel aufgesetztem Antriebsmotor ist dabei besonders platzsparend. Allein schon die Integration von Positionsanzeigeeinrichtung und Sicherheitsendschalter in das Gehäuse selbst oder eine ergänzende axiale Verlängerung dazu bringt jedoch wesentliche Vorteile gegenüber bekannten Geräten.

Die Erfindung wird nachstehend anhand eines in der Zeichnung dargestellten Ausführungsbeispiels noch etwas näher erläutert. Es zeigen:
- Fig. 1: einen variablen Kondensator nach der Erfindung, mit aufgeschnittenem Gehäuseabteil für Endschalter und Positionsanzeigeeinrichtung, und
- Fig. 2: eine Seitenansicht des Kondensators nach Fig. 1.

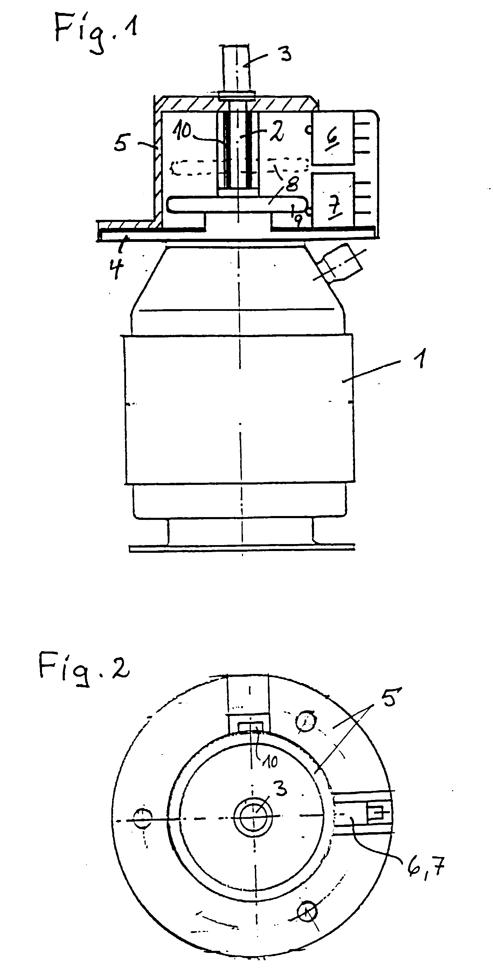

Fig. 1 und 2 der Zeichnung zeigen das Gehäuse 1 eines Standard-Vakuumkondensators, in welchem in bekannter Weise einerseits feste Kondensatorplatten in Form von konzentrischen Ringplatten und andererseits zwischen diese Platten schiebbare weitere Kondensatorplatten (linear verschiebbare Kondensatorplatten) angeordnet sind, um durch Verschieben dieser Platten die Kapazität des Kondensators beliebig zu verstellen. Im Innern des Gehäuses herrscht üblicherweise Vakuum. Die verschiebbaren Platten werden mittels einer Verstellspindel 2 verschoben, und zwar über einen Motor (nicht dargestellt), welcher über ein Getriebe am Endabschnitt 3 der Spindel 2 einwirkt.

Bisher wurde ein Positionsanzeiger ebenfalls über die Spindel 2, 3 angetrieben (parallel zum Kondensator 1 angeordnet). Am Kopfende des Kondensators 1 ist über den Flansch 4 ein zusätzliches Gehäuse 5 angesetzt, durch welches das Ende der Spindel 2 führt. In diesem Gehäuse 5 sind zwei einstellbare Sicherheitsendschalter 6, 7 angeordnet, welche durch ein auf der Spindel 2 koordiniert mit der Kondensatorplattenbewegung laufendes Betätigungselement 8 mit Betätigungsfinger 9 geschaltet werden (in jeder Endposition des Kondensators).

Ebenfalls auf der Spindel 2 ist eine Lineareinheit 10 eines Längenpotentiometers als Positionsanzeigeeinrichtung vorgesehen.

Anstelle des Längenpotentiometers könnte auch eine mit der Spindel 2 zusammenwirkende optische oder opto-elektrische Messeinrichtung vorgesehen werden.

Grundsätzlich wäre es auch denkbar, den Antriebsmotor für die Spindel 2 direkt über das Spindelende 3 zu setzen, um so eine noch kompaktere Ausführung zu erhalten.

## Patentansprüche

1. Variabler Kondensator, insbesondere Vakuumkondensator, bei welchem in einem Gehäuse (1) feste Kondensatorplatten und bezüglich diesen linear verschiebbare Kondensatorplatten auf einer motorisch angetriebenen Verstellspindel (2) angeordnet sind, wobei den verschiebbaren Kondensatorplatten Sicherheitsendschalter (6, 7) und eine Positionsanzeigeeinrichtung (10) zugeordnet sind, dadurch gekennzeichnet, dass die Positionsanzeigeeinrichtung (10) und die Sicherheitsendschalter (6, 7) an einem Kopfende des Kondensatorgehäuses (1) in einem Teil dieses Gehäuses selbst oder einem über der Verstellspindel angeflanschten Zusatzgehäuse (5) angeordnet sind und von der Verstellspindel angetrieben beziehungsweise geschaltet werden.

2. Variabler Kondensator nach Anspruch 1, dadurch gekennzeichnet, dass die Endschalter (6, 7) für beide Endpositionen der verschiebbaren Kondensatorplatten in radialem Abstand von der Verstellspindel (2) ausserhalb des eigentlichen Kondensatorgehäuses angeordnet sind, und dass ein mit den verschiebbaren Platten auf der Verstellspindel (2) mitlaufendes Element (8) mit einem radial nach aussen zwischen die Endschalter (6, 7) ragenden Betätigungsfinger (9) ausgerüstet ist.

3. Variabler Kondensator nach einem der Ansprüche 1 oder 2, dadurch gekennzeichnet, dass die Position der Endschalter (6, 7) einstellbar ist.

4. Variabler Kondensator nach einem der Ansprüche 1 bis 3, dadurch gekennzeichnet, dass die Positionsanzeigeeinrichtung (10) eine mit den verschiebbaren Kondensatorplatten koordiniert mitlaufende optische Anzeige umfasst.

5. Variabler Kondensator nach einem der Ansprüche 1 bis 3, dadurch gekennzeichnet, dass die Positionsanzeigeeinrichtung (10) einem mit der Verstellspindel (2) und/oder den verschiebbaren Kondensatorplatten koordiniert zusammenwirkenden Wegsensor, z. B. ein Längenpotentiometer, umfasst.

6. Variabler Kondensator nach einem der Ansprüche 1 bis 5, dadurch gekennzeichnet, dass die Verstellspindel (2) einseitig aus dem eigentlichen Kondensatorgehäuse (1) herausragt und am Endabschnitt für den motorischen Antrieb ausgebildet ist, wobei die auf bzw. über der Spindel liegenden Mittel für die Betätigung der Sicherheitsendschalter (6, 7) und die Positionsanzeige (10) zwischen dem eigentlichen Kondensatorgehäuse und dem Antriebsabschnitt angeordnet sind.

7. Variabler Kondensator nach einem der Ansprüche 1 bis 6, dadurch gekennzeichnet, dass der Motor für den Antrieb der Verstellspindel (2) in der Verlängerung der Spindelachse oder auf letzterer angeordnet ist.

8. Variabler Kondensator nach einem der Ansprüche 1 bis 7, dadurch gekennzeichnet, dass die Gehäuseteile aus elektrisch isolierendem Material bestehen.

## Claims

1. Variable capacitor, in particular vacuum capacitor, with which fixed capacitor plates, and relative to them linearly relocatable capacitor plates, are arranged on a motor-driven adjusting spindle (2) inside a housing (1), safety limit switches (6, 7) and a position indicating device (10) being allocated to the movable capacitor plates, wherein the position indicating device (10) and the safety limit switches (6, 7) are arranged at a head end of the capacitor housing (1) in a part of said housing or in an add-on housing flanged on above the adjusting spindle and wherein said position indicating device and safety limit switches are driven or switched by said adjusting spindle.

2. Variable capacitor as claimed in claim 1, wherein the limit switches (6, 7) for the two limit positions of the relocatable capacitor plates are arranged at a radial distance from the adjusting spindle (2) outside the capacitor housing, and wherein an element (8) moving along with the relocatable plates on the adjusting spindle (2) is equipped with an actuating finger (9) projecting radially to the outside between the limit switches (6, 7).

3. Variable capacitor as claimed in claim 1 or 2, wherein the position of the limit switches (6, 7) is adjustable.

4. Variable capacitor as claimed in any one of claims 1 to 3, wherein the position indicating device (10) encompasses an optical indicator moving along in coordination with the relocatable capacitor plates.

5. Variable capacitor as claimed in any one of claims 1 to 3, wherein the position indicating device (10) encompasses a linear distance sensor, e.g. a linear distance potentiometer, which acts in coordination with the adjusting spindle (2) or with the relocatable capacitor plates.

6. Variable capacitor as claimed in any one of claims 1 to 5, wherein the adjusting spindle (2) projects out of one end of the capacitor housing (1) and at the end section is designed for motor power drive, the means for actuation of safety limit switches (6, 7) and position indicating device (10) located on or above the spindle being arranged between the capacitor housing and the drive section.

7. Variable capacitor as claimed in any one of claims 1 to 6, wherein the motor for driving the adjusting spindle (2) is arranged in the extension of the spindle axis or on said spindle axis.

8. Variable capacitor as claimed in any one of claims 1 to 7, wherein the parts of the housing consist of electrically insulating material.

## Revendications

1. Condensateur variable, en particulier condensateur à vide, dans lequel des plaques de condensateur fixes et des plaques de condensateurs déplaçables linéairement par rapport à celles-ci, sont disposées dans un carter (1) sur une tige de réglage (2) entraînée par moteur, ce en quoi des interrupteurs fin de course de sécurité (6, 7) et un équipement indicateur de position (10) sont affectés aux plaques de condensateur déplaçables, caractérisé en ce que l'équipement indicateur de position (10) et les interrupteurs fin de course de sécurité (6, 7) sont disposés à un bout du carter du condensateur (1), dans une partie de ce carter lui-même, ou dans un carter supplémentaire (5) fixé par bride au dessus de la tige de réglage, et sont entraînés ou commutés par la tige de réglage.

2. Condensateur variable selon la revendication 1, caractérisé en ce que les interrupteurs fin de course (6, 7) pour les deux positions extrêmes des plaques de condensateur déplaçables, sont disposés à distance radiale de la tige de réglage (2) à l'extérieur du carter proprement dit du condensateur, et en ce qu'un élément (8) courant sur la tige de réglage (2) avec les plaques déplaçables, est équipé d'un doigt de commande (9) faisant saillie radialement vers l'extérieur entre les interrupteurs fin de course (6, 7).

3. Condensateur variable selon l'une des revendications 1 ou 2, caractérisé en ce que la position des interrupteurs fin de course (6, 7) est réglable.

4. Condensateur variable selon l'une des revendications 1 à 3, caractérisé en ce que l'équipement indicateur de position (10) comprend un indicateur optique fonctionnant en coordination avec les plaques de condensateur déplaçables.

5. Condensateur variable selon l'une des revendications 1 à 3, caractérisé en ce que l'équipement indicateur de position (10) comprend un capteur de déplacement agissant en coordination avec la tige de réglage (2) et/ou les plaques de condensateur déplaçables, par exemple un potentiomètre longitudinal.

6. Condensateur variable selon l'une des revendications 1 à 5, caractérisé en ce que la tige de réglage (2) fait saillie d'un seul côté depuis le carter proprement dit du condensateur (1), et qu'elle est configurée à la section finale pour l'entraînement par moteur, ce en quoi le milieu qui repose sur ou au dessus de la tige pour la commande des interrupteurs fin de course de sécurité (6, 7) et l'indicateur de position (10) sont disposés entre le carter proprement dit du condensateur et la section d'entraînement.

7. Condensateur variable selon l'une des revendications 1 à 6, caractérisé en ce que le moteur destiné à l'entraînement de la tige de réglage (2) est disposé dans le prolongement de l'axe de la tige ou sur cette dernière.

8. Condensateur variable selon l'une des revendications 1 à 7, caractérisé en ce que les pièces du carter sont constituées de matériau électriquement isolant.
